# EUROPEAN PATENT APPLICATION

(11) **EP 4 830 527 A1**
(43) Date of publication of application: **28.10.2026**
(21) Application number: 24907549.0
(22) Date of filing: 20.12.2024
(51) Int. Cl.: A23C 9/00, A23C 9/12, A23L 2/00, A23L 2/38, A23L 2/52

(54) **LACTIC BEVERAGE, METHOD FOR PRODUCING SAME, AND METHOD FOR IMPROVING BEVERAGE AFTERTASTE**

(30) Priority: 22.12.2023 JP 2023217354
(71) Applicant: Kirin Beverage Company, Limited, Tokyo 101-8645 (JP)
(72) Inventor: SANO Ryoko, Tokyo 101-8645 (JP); OKOCHI Ran, Tokyo 101-8645 (JP); KINOSHITA Akiko, Tokyo 101-8645 (JP)
(74) Representative: Hoffmann Eitle
(86) International application number: PCT/JP2024/045208
(87) International publication number: WO 2025/135166

(57) **Abstract**

A milk beverage contains a milk ingredient and dead bacteria of beneficial bacteria and has a protein concentration of 0.010 mass% or more and a dead bacteria concentration of the beneficial bacteria of 5 × 10⁸/L or more.

## Description

### TECHNICAL FIELD

The present disclosure relates to a milk beverage, a method of producing the same, and a method of improving clean finish of a beverage.

### BACKGROUND

Beverages, and in particular milk beverages, which are beverages containing dairy products, are widely popular for characteristics such as the richness of dairy products. However, beverages containing dairy products are prone to having a poor clean finish in terms that milky odor may linger in the mouth or a coating sensation may remain upon drinking thereof, and various techniques for improving the clean finish of such beverages are being studied.

For example, Patent Literature (PTL) 1 discloses a flavor quality enhancer containing a β-glucooligosaccharide as an active ingredient for use as a flavor quality enhancer that can enhance the quality of flavor of a food or beverage containing a dairy product without loss of the richness of flavor thereof.

Moreover, commercially available beverages are subjected to heat sterilization in order to improve preservability, but this heat sterilization lowers the pH of a beverage, thereby resulting in undesirable sourness and noticeable deterioration of aromatic taste over time. In response, PTL 2, for example, discloses a beverage pH modifier having a potassium salt as an active ingredient and a beverage in which this pH modifier is used.

### CITATION LIST

### Patent Literature

PTL 1: JP 2002-335903 A
PTL 2: WO 1996/006539 A1

### SUMMARY

### (Technical Problem)

However, although the conventional additives described above improve clean finish of a milk beverage to a certain extent, these additives leave room for further improvement due to an off-taste arising from these additives. In particular, the method described in PTL 2 has resulted in problems of bitterness and poor in mouth feel of the added potassium salt. Accordingly, an object of the present disclosure is to provide a milk beverage with beneficial bacteria that has excellent clean finish.

### (Solution to Problem)

The inventors conducted diligent studies with the aim of solving the problems described above. The inventors discovered that among milk ingredients, proteins in particular can act as a cause of poor clean finish. Moreover, the inventors focused on beneficial bacteria as an additive that has little negative impact on the flavor of a milk beverage and reached a new finding that the clean finish of a milk beverage can be improved through blending of a specific amount of dead bacteria of beneficial bacteria, thereby completing the present disclosure.

Specifically, with the aim of advantageously solving the problems described above, [1] a presently disclosed milk beverage comprises a milk ingredient and dead bacteria of beneficial bacteria, wherein a concentration of a protein is 0.010 mass% or more, and a dead bacteria concentration of the beneficial bacteria is 5 × 10⁸/L or more. Through the concentration of the protein and the dead bacteria concentration of the beneficial bacteria being not less than the lower limits set forth above, clean finish of the milk beverage can be improved.

[2] In the milk beverage according to the foregoing [1], the dead bacteria concentration of the beneficial bacteria is preferably 2 × 10¹²/L or less. By setting the dead bacteria concentration of the beneficial bacteria contained in the beverage as not more than the upper limit set forth above, strengthening of odor originating from the beneficial bacteria can be suppressed.

[3] In the milk beverage according to the foregoing [1] or [2], the beneficial bacteria are preferably one type or two or more types selected from the group consisting of Lactobacillus bacteria and Lactococcus bacteria. When the beneficial bacteria are one type or two or more types selected from the group consisting of Lactobacillus bacteria and Lactococcus bacteria, clean finish of the milk beverage can be further improved.

[4] In the milk beverage according to any one of the foregoing [1] to [3], the beneficial bacteria are preferably one type or two or more types selected from the group consisting of Lactobacillus rhamnosus CRL1505, Lactococcus lactis subsp. lactis JCM5805, and Lactobacillus paracasei KW3110.

[5] The milk beverage according to any one of the foregoing [1] to [4] preferably comprises one type or a plurality of types selected from the group consisting of fermented milk, milk proteins, skimmed milk powder, whey proteins, fermented whey, and cow milk as the milk ingredient.

[6] In the milk beverage according to any one of the foregoing [1] to [5], a Brix sugar content/acidity ratio is preferably not less than 1.50 and not more than 150. When the Brix sugar content/acidity ratio is within the range set forth above, the milk beverage can be provided with even better clean finish.

[7] In the milk beverage according to any one of the foregoing [1] to [6], sodium concentration is preferably 200 mg/100 mL or less. When the sodium concentration is not more than the upper limit set forth above, sliminess of the milk beverage can be suppressed, and mid-palate richness can be enhanced. Note that the term "mid-palate richness" as used in the present specification refers to the intensity and spreading of taste perceived between the initial and final tastes experienced when drinking a beverage.

[8] The milk beverage according to any one of the foregoing [1] to [7] is preferably a packaged beverage.

[9] Moreover, a presently disclosed method of producing a milk beverage is a method of producing a milk beverage that contains a milk ingredient and dead bacteria of beneficial bacteria, the method comprising a step of blending such that a concentration of a protein is 0.010 mass% or more and a dead bacteria concentration of the beneficial bacteria is 5 × 10⁸/L or more. Through this production method, it is possible to produce a milk beverage with beneficial bacteria that has excellent clean finish.

[10] Furthermore, a presently disclosed method of improving clean finish of a milk beverage is a method of improving clean finish of a milk beverage that contains a milk ingredient and dead bacteria of beneficial bacteria, the method comprising a step of blending such that a concentration of a protein is 0.010 mass% or more and a dead bacteria concentration of the beneficial bacteria is 5 × 10⁸/L or more. Through this method, it is possible to improve clean finish of a beverage.

### (Advantageous Effect)

According to the present disclosure, it is possible to provide a milk beverage with beneficial bacteria that has excellent clean finish.

### DETAILED DESCRIPTION

### (Milk beverage with beneficial bacteria)

The presently disclosed milk beverage with beneficial bacteria (hereinafter, also referred to simply as a "milk beverage") is a milk beverage that contains a milk ingredient and dead bacteria of beneficial bacteria and in which the concentration of a protein is 0.010 mass% or more and the dead bacteria concentration of the beneficial bacteria is 5 × 10⁸/L or more. The presently disclosed milk drink with beneficial bacteria has excellent clean finish.

The term "milk beverage" as used in the present disclosure encompasses "milk beverages" defined in the "Ministerial Ordinance on Milk and Milk products Concerning Composition Standards, etc." (hereinafter, referred to as the "Ordinance on Milk, etc."). However, the term "milk beverage" as used in the present disclosure is not limited to milk beverages in accordance with the definition in the Ordinance on Milk, etc., and so long as the milk beverage contains a milk ingredient, the milk solids content may fall below the standard in the Ordinance on Milk, etc.

The term "clean finish" as used in the present disclosure indicates the lack of milky odor and coating sensation that can be experienced after drinking a milk beverage and the lack of sensation of the milk drink lingering in the mouth after drinking. The mechanism by which the presently disclosed milk beverage has excellent clean finish is not clear, but it is presumed that the inclusion of dead bacteria of beneficial bacteria in a concentration not less than the lower limit set forth above alleviates milky odor and coating sensation that can be experienced after drinking the milk beverage.

### <Composition>

### <<Dead bacteria of beneficial bacteria>>

In the present disclosure, dead bacteria of beneficial bacteria are used. No specific limitations are placed on the beneficial bacteria, and examples thereof include Oenococcus bacteria, Bifidobacterium bacteria, Weissella bacteria, Tetragenococcus bacteria, Lactococcus bacteria, Leuconostoc bacteria, Pediococcus bacteria, Streptococcus bacteria, Enterococcus bacteria, Lactobacillus bacteria, acetic acid bacteria, and Bacillus bacteria.

Note that the term "Lactobacillus bacteria" as used in the present disclosure encompasses bacteria that were classified as Lactobacillus prior to the Lactobacillus reclassification. For example, "Lactobacillus bacteria" encompasses bacteria that, in accompaniment to the Lactobacillus reclassification, were newly classified as Acetilactobacillus, Agrilactobacillus, Amylolactobacillus, Apilactobacillus, Bombilactobacillus, Companilactobacillus, Dellaglioa, Fructilactobacillus, Furfurilactobacillus, Holzapfelia, Lacticaseibacillus, Lactiplantibacillus, Lapidilactobacillus, Latilactobacillus, Lentilactobacillus, Levilactobacillus, Ligilactobacillus, Limosilactobacillus, Liquorilactobacillus, Loigolactobacillus, Paralactobacillus, Paucilactobacillus, Schleiferilactobacillus, Secundilactobacillus, and so forth.

Of the examples given above, Oenococcus bacteria, Bifidobacterium bacteria, Lentilactobacillus bacteria, Weissella bacteria, Tetragenococcus bacteria, Lactococcus bacteria, Leuconostoc bacteria, Pediococcus bacteria, Enterococcus bacteria, Lactobacillus bacteria, and Lactiplantibacillus bacteria are preferable as the beneficial bacteria. Moreover, from a viewpoint of further improving clean finish of the milk beverage, it is more preferable that one type or two or more types selected from the group consisting of Lactobacillus bacteria and Lactococcus bacteria are included as the beneficial bacteria.

The Oenococcus bacteria mentioned above may be Oenococcus oeni or the like, for example. Specific examples of Oenococcus bacteria include Oenococcus oeni JCM6125.

The Bifidobacterium bacteria mentioned above may be Bifidobacterium animalis subsp. lactis, Bifidobacterium longum subsp. infantis, or the like, for example. Specific examples of Bifidobacterium bacteria include Bifidobacterium animalis subsp. lactis JCM10602 and Bifidobacterium longum subsp. infantis JCM1222.

The Weissella bacteria mentioned above may be Weissella paramesenteroides, Weissella viridescens, or the like, for example. Specific examples of Weissella bacteria include Weissella paramesenteroides JCM9890 and Weissella viridescens JCM1174.

The Tetragenococcus bacteria mentioned above may be Tetragenococcus halophilus or the like, for example. Specific examples of Tetragenococcus bacteria include Tetragenococcus halophilus NRIC0098.

The Lactococcus bacteria mentioned above may be Lactococcus lactis, Lactococcus lactis subsp. lactis, Lactococcus garvieae, Lactococcus lactis subsp. cremoris, Lactococcus lactis subsp. hordniae, Lactococcus plantarum, or the like, for example.

Specific examples of Lactococcus bacteria include Lactococcus lactis subsp. lactis JCM5805, Lactococcus lactis subsp. lactis NBRC12007, Lactococcus lactis subsp. lactis NRIC1150, Lactococcus lactis subsp. lactis JCM20101, Lactococcus lactis subsp. lactis JCM7638, Lactococcus lactis subsp. lactis ATCC11454, Lactococcus garvieae NBRC100934, Lactococcus lactis subsp. cremoris JCM16167, Lactococcus lactis subsp. cremoris NBRC100676, Lactococcus lactis subsp. hordniae JCM1180, Lactococcus lactis subsp. hordniae JCM11040, and Lactococcus plantarum JCM11056.

The Leuconostoc bacteria mentioned above may be Leuconostoc carnosum, Leuconostoc lactis, or the like, for example. Specific examples of Leuconostoc bacteria include Leuconostoc carnosum JCM9695 and Leuconostoc lactis NBRC12455.

The Pediococcus bacteria mentioned above may be Pediococcus acidilactici, Pediococcus pentosaceus, Pediococcus cellicola, Pediococcus claussenii, Pediococcus damnosus, Pediococcus ethanolidurans, Pediococcus inopinatus, Pediococcus parvulus, Pediococcus stilesii, or the like, for example. Specific examples of Pediococcus bacteria include Pediococcus acidilactici JCM8797, Pediococcus acidilactici K15, and Pediococcus damnosus JCM5886.

The Streptococcus bacteria mentioned above may be Streptococcus thermophilus or the like, for example. Specific examples of Streptococcus bacteria include Streptococcus thermophilus SBC8781.

The Enterococcus bacteria mentioned above may be Enterococcus alcedinis or the like, for example.

The Lactobacillus bacteria mentioned above may be Lactobacillus paracasei, Lactobacillus delbrueckii, Lactobacillus acidophilus, Lactobacillus casei, Lactobacillus fructivorans, Lactobacillus hilgardii, Lactobacillus rhamnosus, Lactobacillus gasseri, Lactobacillus acidophilus, Lactobacillus bulgaricus, Lactobacillus parakefiri, Lactobacillus plantarum, or Lactobacillus pentosus, for example.

Specific examples of Lactobacillus bacteria include Lactobacillus paracasei KW3110, Lactobacillus paracasei MCC1849, Lactobacillus paracasei K71, Lactobacillus rhamnosus GG, Lactobacillus rhamnosus CRL1505, Lactobacillus gasseri SBT2055, Lactobacillus acidophilus L-92, Lactobacillus bulgaricus OLL1073R-1, Lactobacillus parakefiri (Lentilactobacillus parakefiri in new classification) JCM8573, Lactobacillus plantarum (Lactiplantibacillus plantarum in new classification) L-137, and Lactobacillus pentosus (Lactiplantibacillus pentosus in new classification) ONRICb0240.

The acetic acid bacteria mentioned above may be Gluconacetobacter bacteria, Acetobacter bacteria, Gluconobacter bacteria, or the like, for example, without any specific limitations, are preferably Gluconacetobacter bacteria, are more preferably Gluconacetobacter hansenii, and are even more preferably Gluconacetobacter hansenii GK-1.

The Bacillus bacteria mentioned above may be Bacillus coagulans or the like, for example, without any specific limitations. Specific examples of Bacillus bacteria include Bacillus coagulans SANK70258 strain.

Of the examples given above, the inclusion of one type or two or more types selected from the group consisting of Lactobacillus rhamnosus CRL1505, Lactococcus lactis subsp. lactis JCM5805, and Lactobacillus paracasei KW3110 as the beneficial bacteria is preferable from a viewpoint of further improving clean finish of the milk beverage.

In the present disclosure, the dead bacteria of the beneficial bacteria may be a dry material or may be a non-dry material without any specific limitations, though a dry material is preferable from a viewpoint of storage stability of the dead beneficial bacteria. In particular, a dry powder of dead beneficial bacteria is preferable as the dead bacteria of the beneficial bacteria.

No specific limitations are placed on the method by which the dead bacteria of the beneficial bacteria are prepared. For example, a method in which a culture medium where beneficial bacteria have been cultured is sterilized and then filtration and centrifugal separation, or the like, are performed to collect bacterial cells or a method in which bacterial cells are collected by filtration and centrifugal separation, or the like, from a culture medium where beneficial bacteria have been cultured and are then sterilized can be adopted. Note that among beneficial bacteria, particularly lactic acid bacteria, for example, can be cultured using a lactic acid bacteria culture medium that is commonly known to those skilled in the art such as MRS (de Man-Rogosa-Sharpe) culture medium, which contains glucose, hydrolyzed protein, and yeast extract. In general, culturing can be performed under anaerobic conditions with a culture temperature of 30°C to 37°C and a culture period of 2 days to 3 days.

In addition, the bacterial cells that have been collected after culturing can be further subjected to drying and pulverization as necessary. Note that no specific limitations are placed on the means of sterilization, and common means of killing bacteria such as not only heating, but also UV irradiation, γ-ray irradiation, and so forth can be adopted.

The concentration of the dead beneficial bacteria contained in the presently disclosed milk beverage is required to be 5 × 10⁸/L or more, is preferably 7 × 10⁸/L or more, and more preferably 17 × 10⁸/L or more, and is more preferably 2 × 10¹²/L or less, even more preferably 1.6 × 10¹²/L or less, further preferably 1.5 × 10¹²/L or less, particularly preferably 1 × 10¹²/L or less, even more particularly preferably 8,000 × 10⁸/L or less, even more particularly preferably 5,000 × 10⁸/L or less, even more particularly preferably 1,200 × 10⁸/L or less, even more particularly preferably 700 × 10⁸/L or less, and most preferably 450 × 10⁸/L or less. When the concentration of the dead beneficial bacteria is not less than any of the lower limits set forth above, clean finish of the milk beverage can be improved. Moreover, when the concentration of the dead beneficial bacteria is not more than any of the upper limits set forth above, a distinctive odor originating from the dead beneficial bacteria can be suppressed.

The concentration of the dead beneficial bacteria contained in the milk beverage can be controlled through adjustment of the additive amount of the dead beneficial bacteria that is blended in the milk beverage. Furthermore, the concentration of the dead beneficial bacteria contained in the milk beverage can be measured by a commonly known bacterial count measurement method without any specific limitations, and examples thereof include direct microscopy, the electric sensing zone method, the PCR method, and flow cytometry, with flow cytometry being preferable.

### <<Milk ingredient>>

The milk ingredient that is contained in the presently disclosed milk beverage is milk solids content originating from a milk raw material, and specific examples thereof include a milk protein, milk fat content, lactose, and so forth.

### [Milk raw material]

The milk raw material that is used in the presently disclosed milk beverage may be milk or a milk product. More specifically, the milk raw material may, for example, be one type or a plurality of types of milk raw materials selected from the group consisting of raw milk, cow milk, special milk, goat milk, sheep milk, buffalo milk, composition modified milk, low fat milk, fat-free milk, processed milk, milk beverages, cream, butter, butter oil, milk proteins, whey proteins (for example, concentrated whey, whey powder, and protein concentrated whey powder defined in the Ordinance on Milk, etc.), casein, fermented whey, concentrated milk, concentrated skimmed milk, evaporated milk, evaporated skimmed milk, whole milk powder, skimmed milk powder, cream powder, butter milk powder, formulated milk powder, formulated liquid milk, fermented milk, and lactic acid bacteria beverages. Of these examples, the milk raw material preferably includes, in particular, one type or a plurality of types selected from the group consisting of fermented milk, milk proteins, skimmed milk powder, whey proteins, fermented whey, and cow milk.

### [Protein]

The protein that is contained in the presently disclosed milk beverage may be a milk protein. Examples of the milk protein include milk proteins, whey proteins, and casein. Milk proteins mentioned here are also referred to as total milk protein and are a product that is obtained by concentrating proteins contained in cow milk by an ultra-filtration technique or the like and then drying the concentrate and that includes both casein and whey proteins. Note that the milk protein is an ingredient that can originate from any of the "milk raw materials" that were listed in the "Milk ingredient" section.

The concentration of the protein contained in the presently disclosed milk beverage is required to be 0.010 mass% or more, is preferably 0.050 mass% or more, more preferably 0.075 mass% or more, even more preferably 0.100 mass% or more, and particularly preferably 0.200 mass% or more, and is preferably 90 mass% or less, more preferably 50 mass% or less, even more preferably 10 mass% or less, particularly preferably 7 mass% or less, and more particularly preferably 5 mass% or less. When the protein concentration is not less than any of the lower limits set forth above, richness of the milk beverage can be increased. Moreover, when the protein concentration is not more than any of the upper limits set forth above, clean finish of the milk beverage can be improved.

Although no specific limitations are placed on the origin of the protein, in a case in which the protein is a milk protein, the amount of the milk protein can be adjusted through adjustment of the used amount of the milk raw material, for example.

The concentration of the protein contained in the milk beverage can be measured based on the Kjeldahl method, for example.

### <<Sodium>>

The presently disclosed milk beverage preferably contains sodium. No specific limitations are placed on the raw material containing sodium so long as it is drinkable. Sodium contained in the milk beverage may be sodium originating from the milk raw material described above or may be sodium that is present due to addition of a sodium salt such as sodium chloride or sodium bicarbonate or a material derived from milk such as whey minerals obtained through concentration of mineral content contained in whey, inorganic concentrated whey, or whey cheese.

The concentration of sodium contained in the milk beverage can be measured based on atomic absorption spectroscopy, for example.

The sodium concentration of the presently disclosed milk beverage is preferably 200 mg/100 mL or less, more preferably 150 mg/100 mL or less, more preferably 120 mg/100 mL or less, even more preferably 80 mg/100 mL or less, further preferably 50 mg/100 mL or less, particularly preferably 45 mg/100 mL or less, and more particularly preferably 25 mg/100 mL or less from a viewpoint of suppressing sliminess of the milk beverage, further enhancing clean finish of the milk beverage, and also imparting mid-palate richness. Moreover, the sodium concentration is preferably 5 mg/100 mL or more, more preferably 10 mg/100 mL or more, and even more preferably 20 mg/100 mL or more from a viewpoint of further enhancing clean finish of the milk beverage and also imparting mid-palate richness.

No specific limitations are placed on the origin of sodium that is contained in the milk beverage. For example, the sodium concentration can be adjusted through adjustment of the used amount of the milk raw material that is contained in the milk beverage or through addition of mineral content such as the previously described sodium salt.

### <<Other ingredients>>

The presently disclosed milk beverage may contain one type or two or more types of additives selected from the group consisting of acidulants, fragrances and flavorings, colorings, sweeteners, preservatives, thickeners, stabilizers, emulsifiers, dietary fiber, bittering agents, antioxidants, pH modifiers, vitamins, nutritional fortifiers, umami ingredients, dietary fiber, extracts, solvents, minerals other than sodium, water-soluble functional ingredients, and lipid-soluble functional ingredients within a range not interfering with the effects according to the present disclosure. No specific limitations are placed on the additives described above, and typically used examples thereof can be adopted. Specifically, acesulfame K, stevia, and sucralose can be adopted as sweeteners, citric acid can be adopted as an acidulant, soybean polysaccharide and pectin can be adopted as stabilizers, and potassium, magnesium, and calcium can be adopted as minerals other than sodium, for example.

### <Physical properties>

### <<Brix sugar content/acidity ratio>>

A Brix sugar content/acidity ratio of the presently disclosed milk beverage is preferably 1.50 or more, more preferably 2.00 or more, more preferably 2.25 or more, even more preferably 3.00 or more, and particularly preferably 5.00 or more. Moreover, the Brix sugar content/acidity ratio of the milk beverage is preferably 150 or less, more preferably 125 or less, even more preferably 110 or less, further preferably 100 or less, particularly preferably 75 or less, more particularly preferably 50 or less, and most preferably 35 or less. When the Brix sugar content/acidity ratio is within any of the ranges set forth above, even better clean finish of the milk beverage is possible, and there is an even better balance between sweetness and clean finish of the milk beverage. The Brix sugar content/acidity ratio can be calculated as the quotient of "Brix sugar content ÷ acidity" using the Brix sugar content and acidity described below.

### [Brix sugar content]

The Brix sugar content of the presently disclosed milk beverage is preferably 2.0°Bx or more, more preferably 4.0°Bx or more, even more preferably 5.0°Bx or more, and particularly preferably 10°Bx or more. Moreover, the sugar content of the presently disclosed milk beverage is preferably 30°Bx or less, more preferably 25°Bx or less, even more preferably 20°Bx or less, further preferably 18°Bx or less, and particularly preferably 15°Bx or less. The Brix sugar content can be measured by a method described in the EXAMPLES section.

### [Acidity]

The acidity of the presently disclosed milk beverage is preferably 0.05 or more, more preferably 0.10 or more, more preferably 0.20 or more, more preferably 0.30 or more, more preferably 0.40 or more, and more preferably 0.50 or more. Moreover, the acidity of the presently disclosed milk beverage is preferably 1.0 or less, more preferably 0.9 or less, even more preferably 0.8 or less, and particularly preferably 0.7 or less. When the acidity is within any of the ranges set forth above, the milk beverage can be provided with a suitable degree of sourness. The acidity can be measured by a method described in the EXAMPLES section.

The Brix sugar content, acidity, and Brix sugar content/acidity ratio of the milk beverage can be adjusted through addition of a sweetener, acidulant, pH modifier, or the like described above.

### <<Viscosity>>

The viscosity of the presently disclosed milk beverage is preferably 5 mPa·s or more, more preferably 10 mPa·s or more, and more preferably 20 mPa·s or more. Moreover, the viscosity of the presently disclosed milk beverage is preferably 500 mPa·s or less, more preferably 400 mPa·s or less, even more preferably 300 mPa·s or less, and particularly preferably 250 mPa·s or less. The viscosity can be measured, for example, under conditions of a measurement temperature of 20°C and a rotation speed of 60 rpm using a viscometer (for example, produced by Toki Sangyo Co., Ltd.).

### (Method of producing milk beverage)

The presently disclosed method of producing a milk beverage is a method of producing a milk beverage that contains a milk ingredient and dead bacteria of beneficial bacteria. No specific limitations are placed on the presently disclosed production method so long as it includes a step of blending such that a concentration of a protein is 0.010 mass% or more and a dead bacteria concentration of beneficial bacteria is 5 × 10⁸/L or more. In other words, production can be performed according to a conventional method of producing a milk beverage that is commonly known so long as the step described above is included.

The step of blending such that a concentration of a protein is 0.010 mass% or more and a dead bacteria concentration of beneficial bacteria is 5 × 10⁸/L or more may, for example, be a step of adding a milk raw material, a protein-containing raw material, an optional solvent such as water, and other optional ingredients into a mixing tank and adding dead bacteria of beneficial bacteria thereto in a proportion of 5 × 10⁸/L or more. Alternatively, the aforementioned step may be a step of simultaneously adding dead bacteria of beneficial bacteria, a milk raw material, a protein-containing raw material, and an optional solvent into a mixing tank. The format of addition, order of blending, and so forth are of course not limited to configurations described above.

Although it may be the case that the presently disclosed milk beverage is not a packaged beverage, the presently disclosed milk beverage is preferably a packaged beverage. A container of the packaged beverage may be a container formed of a plastic material (resin bottle) such as a PET bottle, a polypropylene bottle, or a polyvinyl chloride bottle, a glass bottle container, a paper carton container, a can container, or the like. The volume of the container is not specifically limited but may be 30 mL or more, and preferably 65 mL or more, for example, and may be 2,000 mL or less, and preferably 500 mL or less, for example.

The packaged beverage can be produced by loading a milk beverage that has been obtained according to the presently disclosed production method set forth above into a container such as any of those listed above and then sealing the container according to a known method.

Although the presently disclosed milk beverage may not have been subjected to heat sterilization, the presently disclosed milk beverage may be subjected to heat sterilization from a viewpoint of improving preservability. The method and conditions of the heat sterilization can be a method and conditions that are typically used for a beverage such as a packaged beverage. Retort sterilization, UHT (Ultra High Temperature) sterilization, HTST (High Temperature Short Time) sterilization, or pasteurizer sterilization is preferable.

### (Method of improving clean finish of milk beverage)

The presently disclosed method of improving clean finish of a milk beverage is a method of improving clean finish of a milk beverage that contains a milk ingredient and dead bacteria of beneficial bacteria. No specific limitations are placed on this improvement method so long as it includes a step of blending such that a concentration of a protein is 0.010 mass% or more and a dead bacteria concentration of beneficial bacteria is 5 × 10⁸/L or more.

The step of blending such that a concentration of a protein is 0.010 mass% or more and a dead bacteria concentration of beneficial bacteria is 5 × 10⁸/L or more can be any of the same steps as for the step described in relation to the presently disclosed method of producing a milk beverage.

### EXAMPLES

The following provides a more specific description of the present disclosure based on examples. However, the present disclosure is not limited to these examples.

In each of the test groups described below, various measurements and evaluations were performed by the following methods.

### (Physical property measurement)

### <Brix sugar content>

The Brix sugar content of a beverage obtained in each test group was measured as the refractive index of a sample of each test group at 20°C using a refractometer (digital refractometer Rx-5000α produced by Atago Co., Ltd.).

### <Acidity>

The acidity of a beverage obtained in each test group was measured using an acidity meter (Automatic Potentiometric Titrator AT-10 produced by Kyoto Electronics Manufacturing Co., Ltd.).

### (Test 1) Influence of protein concentration on clean finish of beverage

The following test was conducted in order to investigate the relationship between protein concentration and clean finish of a beverage.

### <Sample preparation>

Test groups 1 to 11 were prepared by, with respect to a solution where 10 mass% of fructose-glucose syrup, 0.1 mass% of an acidulant (citric acid), and 0.1 mass% of a stabilizer (thickening polysaccharide: derived from soybeans) had been added to water, adding milk proteins (produced by Meiji Co., Ltd.) such as to give protein concentrations indicated in Table 1.

Moreover, test groups 12 to 16 were prepared by, with respect to a solution where 10 mass% of fructose-glucose syrup, 0.1 mass% of an acidulant (citric acid), and 0.1 mass% of a stabilizer (thickening polysaccharide: derived from soybeans) had been added to water, adding cow milk, fermented milk, skimmed milk powder, whey proteins, or casein sodium such as to give protein concentrations indicated in Table 1.

### <Sensory evaluation>

For beverages obtained in the test groups that had been prepared at approximately 20°C, five trained panelists having sensory discrimination ability evaluated poorness of clean finish of the beverage obtained in each test group based on an evaluation standard described below. An average value of the evaluation scores of the five panelists was calculated. Note that the standard error of the average value for all panelists was 0.2 or less. The results are shown in Table 1.

In the evaluation, test group 1 (milk proteins not added) and test group 9 (milk proteins concentration 3 mass%) were respectively fixed as 1 point and 4 points, the interval from 1 point to 4 points was equally divided to set a standard per "1 point" of evaluation score, and an evaluation of 1 point to 5 points (a smaller score is preferable) was made based on this standard.

### (Test 2) Change of clean finish and odor originating from beneficial bacteria due to addition of dead bacteria of beneficial bacteria

The following test was conducted in order to investigate the influence of addition of dead bacteria of beneficial bacteria on clean finish and odor originating from beneficial bacteria.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration.

With respect to a solution where 10 mass% of fructose-glucose syrup, 0.1 mass% of an acidulant (citric acid), and 0.1 mass% of a stabilizer (thickening polysaccharide: derived from soybeans) had been added to water, milk proteins were added such as to give a protein concentration of 0.5 mass%. The rhamnosus dead bacteria aqueous solution was added thereto such as to give rhamnosus dead bacteria concentrations indicated in Table 2 and thereby prepare test groups 6 and 17 to 28.

### <Sensory evaluation>

Beverages obtained in the test groups that had been prepared at approximately 20°C were evaluated for two items: poorness of clean finish and lack of odor originating from beneficial bacteria.

A sensory evaluation of poorness of clean finish was performed in accordance with the same evaluation standard as in test 1 and with the same definitions.

With regard to lack of odor originating from beneficial bacteria, five trained panelists having sensory discrimination ability made an evaluation based on an evaluation standard described below for beverages obtained in the test groups that had been prepared at approximately 20°C. An average value of the evaluation scores of the five panelists was calculated. Note that the standard error of the average value for all panelists was 0.2 or less. The results are shown in Table 2.

In the evaluation, test group 6 (rhamnosus dead bacteria not added) and test group 23 (rhamnosus dead bacteria concentration 1,000 × 10⁸/L) were respectively fixed as 5 points and 3 points, the interval from 3 points to 5 points was equally divided to set a standard per "1 point" of evaluation score, and an evaluation of 1 point to 5 points (a larger score is preferable) was made based on this standard.

### (Test 3) Influence of Brix sugar content, acidity, and Brix sugar content/acidity ratio on clean finish and odor originating from beneficial bacteria

The following test was conducted in order to investigate the influence of Brix sugar content, acidity, and Brix sugar content/acidity ratio of a beverage on clean finish and odor originating from beneficial bacteria.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration.

With respect to a solution where 0.1 mass% of a stabilizer (thickening polysaccharide: derived from soybeans) had been added to water, milk proteins and the rhamnosus dead bacteria aqueous solution were added such as to give a protein concentration of 0.1 mass% and a rhamnosus dead bacteria concentration of 20 × 10⁸/L. Fructose-glucose syrup and an acidulant (citric acid) were added thereto such as to give Brix sugar contents, acidities, and Brix sugar content/acidity ratios indicated in Table 3 and thereby prepare test groups 29 to 41.

### <Sensory evaluation>

A sensory evaluation of a beverage obtained in each test group was made in accordance with the same evaluation standard as in test 2 and with the same definitions.

### (Test 4) Influence of sodium concentration on clean finish, odor originating from beneficial bacteria, sliminess, and mid-palate richness

The following test was conducted in order to investigate the influence of sodium concentration of a beverage on clean finish, odor originating from beneficial bacteria, sliminess, and mid-palate richness.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration.

With respect to a solution where 10 mass% of fructose-glucose syrup and 0.1 mass% of a stabilizer (thickening polysaccharide: derived from soybeans) had been added to water, milk proteins, the rhamnosus dead bacteria aqueous solution, and an acidulant (citric acid) were added such as to give a protein concentration of 0.1 mass %, a rhamnosus dead bacteria concentration of 20 × 10⁸/L, and an acidity of 0.05. Refined salt was added thereto to give sodium concentrations indicated in Table 4 and thereby prepare test groups 42 to 49.

### <Sensory evaluation>

Beverages obtained in the test groups were evaluated for 4 items: poorness of clean finish, lack of odor originating from beneficial bacteria, sliminess, and mid-palate richness.

For poorness of clean finish and lack of odor originating from beneficial bacteria, a sensory evaluation was made in accordance with the same evaluation standard as in test 2 and with the same definitions.

For sliminess and mid-palate richness, five trained panelists having sensory discrimination ability made an evaluation based on an evaluation standard described below for beverages obtained in the test groups that had been prepared at approximately 20°C. An average value of the evaluation scores of the five panelists was calculated. Note that the standard error of the average value for all panelists was 0.2 or less. The results are shown in Table 4.

Note that in evaluation of sliminess, test group 42 (sodium concentration 5.0 mg/100 mL) and test group 48 (sodium concentration 120 mg/100 mL) were respectively fixed as 1 point and 3 points, the interval from 1 point to 3 points was equally divided to set a standard per "1 point" of evaluation score, and an evaluation of 1 point to 5 points (a smaller score is preferable) was made based on this standard. In evaluation of mid-palate richness, test group 42 (sodium concentration 5.0 mg/100 mL) and test group 48 (sodium concentration 120 mg/100 mL) were respectively fixed as 1 point and 2 points, a standard was set per " 1 point" of evaluation score based on the difference of the interval from 1 point to 2 points, and an evaluation of 1 point to 5 points (a larger score is preferable) was made based on this standard.

**[Table 1]**

| | Units | Test group 1 | Test group 2 | Test group 3 | Test group 4 | Test group 5 | Test group 6 | Test group 7 | Test group 8 | Test group 9 | Test group 10 | Test group 11 | Test group 12 | Test group 13 | Test group 14 | Test group 15 | Test group 16 |
|---|---|---|---|---|---|---|---|---|---|---|---|---|---|---|---|---|---|
| Milk raw material | - | Milk proteins | | | | | | | | | | | Cow milk | Fermented milk | Skimmed milk powder | Whey proteins | Casein sodium |
| Protein concentration | Mass% | 0 | 0.01 | 0.05 | 0.1 | 0.25 | 0.5 | 1 | 2 | 3 | 4 | 6 | 0.5 | 0.5 | 0.5 | 0.5 | 0.5 |
| Poorness of clean finish | - | 1 | 1.3 | 3 | 3.1 | 3.3 | 3.5 | 3.7 | 3.9 | 4 | 4.3 | 4.8 | 3.3 | 3.3 | 3.4 | 3.3 | 3.3 |

**[Table 2]**

| | Units | Test group 6 | Test group 17 | Test group 18 | Test group 19 | Test group 20 | Test group 21 | Test group 22 | Test group 23 | Test group 24 | Test group 25 | Test group 26 | Test group 27 | Test group 28 |
|---|---|---|---|---|---|---|---|---|---|---|---|---|---|---|
| Protein concentration | Mass% | 0.5 | 0.5 | 0.5 | 0.5 | 0.5 | 0.5 | 0.5 | 0.5 | 0.5 | 0.5 | 0.5 | 0.5 | 0.5 |
| Rhamnosus dead bacteria concentration | ×10⁸/L | 0 | 5 | 10 | 20 | 50 | 100 | 500 | 1000 | 2000 | 5000 | 10000 | 15000 | 20000 |
| Poorness of clean finish | - | 3.5 | 3.3 | 2.9 | 2.5 | 2.4 | 2.2 | 2 | 1.8 | 1.8 | 1.8 | 1.7 | 1.7 | 1.7 |
| Lack of odor originating from beneficial bacteria | - | 5 | 5 | 4.7 | 4.5 | 4.1 | 3.9 | 3.6 | 3 | 2.9 | 2.6 | 2.2 | 1.9 | 1.3 |

**[Table 3]**

| | Units | Test group 29 | Test group 30 | Test group 31 | Test group 32 | Test group 33 | Test group 34 | Test group 35 | Test group 36 | Test group 37 | Test group 38 | Test group 39 | Test group 40 | Test group 41 |
|---|---|---|---|---|---|---|---|---|---|---|---|---|---|---|
| Protein concentration | Mass% | 0.1 | 0.1 | 0.1 | 0.1 | 0.1 | 0.1 | 0.1 | 0.1 | 0.1 | 0.1 | 0.1 | 0.1 | 0.1 |
| Rhamnosus dead bacteria concentration | ×10⁸/L | 20 | 20 | 20 | 20 | 20 | 20 | 20 | 20 | 20 | 20 | 20 | 20 | 20 |
| Brix sugar content | °Bx | 0.5 | 1.0 | 2.0 | 5.0 | 7.0 | 20.0 | 25.0 | 30.0 | 1.5 | 3.5 | 7.0 | 17.5 | 24.5 |
| Acidity | - | 0.2 | 0.2 | 0.2 | 0.2 | 0.2 | 0.2 | 0.2 | 0.2 | 0.7 | 0.7 | 0.7 | 0.7 | 0.7 |
| Brix sugar content/ acidity ratio | - | 2.25 | 5.0 | 10.0 | 25.0 | 35.0 | 100.0 | 125.0 | 150.0 | 2.25 | 5.0 | 10.0 | 25.0 | 35.0 |
| Poorness of clean finish | - | 2.4 | 2 | 1.6 | 1.3 | 1.2 | 1.3 | 1.7 | 3.3 | 2.4 | 2.1 | 1.8 | 1.5 | 1.2 |
| Lack of odor originating from beneficial bacteria | - | 4.5 | 4.5 | 4.5 | 4.5 | 4.5 | 4.5 | 4.5 | 4.5 | 4.5 | 4.5 | 4.5 | 4.5 | 4.5 |

**[Table 4]**

| | Units | Test group 42 | Test group 43 | Test group 44 | Test group 45 | Test group 46 | Test group 47 | Test group 48 | Test group 49 |
|---|---|---|---|---|---|---|---|---|---|
| Protein concentration | Mass% | 0.1 | 0.1 | 0.1 | 0.1 | 0.1 | 0.1 | 0.1 | 0.1 |
| Rhamnosus dead bacteria concentration | ×10⁸/L | 20 | 20 | 20 | 20 | 20 | 20 | 20 | 20 |
| Acidity | - | 0.05 | 0.05 | 0.05 | 0.05 | 0.05 | 0.05 | 0.05 | 0.05 |
| Sodium concentration | mg/100 mL | 5 | 20 | 40 | 60 | 80 | 100 | 120 | 150 |
| Poorness of clean finish | - | 2.5 | 1.8 | 1.5 | 1.3 | 1.2 | 1.5 | 1.6 | 1.8 |
| Lack of odor originating from beneficial bacteria | - | 4.5 | 4.5 | 4.5 | 4.5 | 4.5 | 4.5 | 4.5 | 4.5 |
| Sliminess | - | 1 | 1 | 1.5 | 1.6 | 2.3 | 2.6 | 3 | 3.6 |
| Mid-palate richness | - | 1 | 2.3 | 2.6 | 3.1 | 3.1 | 2.6 | 2 | 1.6 |

It can be seen from Table 1 that clean finish of a milk beverage is affected in test groups 2 to 16 where the protein concentration is 0.010 mass% or more. In particular, it can be seen from test groups 12 to 16 that even when a raw material other than milk proteins is used as a milk raw material containing a milk protein, clean finish is an issue to the same degree with the same level of protein concentration.

It can be seen from Table 2 that in test groups 17 to 28 where a milk ingredient and dead bacteria of beneficial bacteria were included and where the protein concentration was 0.010 mass% or more and the dead beneficial bacteria concentration was 5 × 10⁸/L or more, the influence of protein addition on clean finish was reduced through the addition of dead bacteria of beneficial bacteria.

It can be seen from Table 3 that test groups 29 to 41 where the Brix sugar content/acidity ratio is not less than 1.50 and not more than 150 have excellent clean finish.

It can be seen from Table 4 that in relation to sodium concentration and clean finish, it is possible to further improve clean finish and also enhance mid-palate richness by setting the sodium concentration within a specific range. It can also be seen from Table 4 that sliminess could be suppressed by setting the sodium concentration as lower than a certain upper limit.

### INDUSTRIAL APPLICABILITY

According to the present disclosure, it is possible to provide a milk beverage with beneficial bacteria that has excellent clean finish.

## Claims

1. A milk beverage comprising a milk ingredient and dead bacteria of beneficial bacteria, wherein
a concentration of a protein is 0.010 mass% or more, and
a dead bacteria concentration of the beneficial bacteria is 5 × 10⁸/L or more.

2. The milk beverage according to claim 1, wherein the dead bacteria concentration of the beneficial bacteria is 2 × 10¹²/L or less.

3. The milk beverage according to claim 1, wherein the beneficial bacteria are one type or two or more types selected from the group consisting of Lactobacillus bacteria and Lactococcus bacteria.

4. The milk beverage according to claim 1, wherein the beneficial bacteria are one type or two or more types selected from the group consisting of Lactobacillus rhamnosus CRL1505, Lactococcus lactis subsp. lactis JCM5805, and Lactobacillus paracasei KW3110.

5. The milk beverage according to claim 1, wherein the milk beverage comprises a milk ingredient originating from one type or a plurality of types selected from the group consisting of fermented milk, milk proteins, skimmed milk powder, whey proteins, fermented whey, and cow milk as the milk ingredient.

6. The milk beverage according to claim 1, wherein a Brix sugar content/acidity ratio is not less than 1.50 and not more than 150.

7. The milk beverage according to claim 1, wherein a sodium concentration is 200 mg/mL or less.

8. The milk beverage according to any one of claims 1 to 7, wherein the milk beverage is a packaged beverage.

9. A method of producing a milk beverage that contains a milk ingredient and dead bacteria of beneficial bacteria, the method comprising a step of blending such that a concentration of a protein is 0.010 mass% or more and a dead bacteria concentration of the beneficial bacteria is 5 × 10⁸/L or more.

10. A method of improving clean finish of a milk beverage that contains a milk ingredient and dead bacteria of beneficial bacteria, the method comprising a step of blending such that a concentration of a protein is 0.010 mass% or more and a dead bacteria concentration of the beneficial bacteria is 5 × 10⁸/L or more.
